(19) Europäisches Patentamt
European Patent Office
Office européen des brevets

(11) **EP 3 340 413 B1**

(12) **EUROPÄISCHE PATENTSCHRIFT**

(45) Veröffentlichungstag und Bekanntmachung des Hinweises auf die Patenterteilung:
**01.07.2020  Patentblatt 2020/27**

(51) Int Cl.:
*H02J 3/00* *(2006.01)*

(21) Anmeldenummer: **16206131.1**

(22) Anmeldetag: **22.12.2016**

(54) **VERFAHREN, STEUEREINRICHTUNG UND SYSTEM ZUM ERMITTELN VON ZUSTANDSDATEN EINES ELEKTRISCHEN ENERGIEVERSORGUNGSNETZES**

METHOD, CONTROL DEVICE AND SYSTEM FOR DETERMINING CONDITION DATA OF AN ELECTRICAL ENERGY SUPPLY NETWORK

PROCÉDÉ, DISPOSITIF DE COMMANDE ET SYSTÈME DE DÉTERMINATION DE DONNÉES D'ÉTAT D'UN RÉSEAU D'ALIMENTATION ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**27.06.2018  Patentblatt 2018/26**

(73) Patentinhaber: **Siemens Aktiengesellschaft**
**80333 München (DE)**

(72) Erfinder:
• **Duckheim, Mathias**
  **91052 Erlangen (DE)**
• **Fröhner, Wiebke**
  **92224 Amberg (DE)**
• **Werner, Thomas**
  **91126 Rednitzhembach (DE)**

(56) Entgegenhaltungen:
**EP-A1- 3 107 174    WO-A2-2012/103904**

## Beschreibung

Die Erfindung betrifft ein Verfahren gemäß dem Oberbegriff des Anspruchs 1. Die Erfindung betrifft auch eine entsprechende Steuereinrichtung sowie ein System mit einer solchen Steuereinrichtung. Ein solches Verfahren ist z.B. aus der EP 3107174 A1 bekannt. Bei der Planung und beim Betrieb von Energieversorgungsnetzen besteht häufig die Notwendigkeit, Zustandswerte, wie z.B. Knotenspannungen und Zweigströme, an verschiedenen Stellen des Energieversorgungsnetzes zu bestimmen, ohne dass diese direkt gemessen werden können. Insbesondere in mehrfach verzweigten Mittel- und Niederspannungsnetzen, aber auch in Hochspannungsnetzen sind jedoch nicht an jedem Netzknoten Messgeräte installiert, so dass eine flächendeckende Messung aller Zustandswerte oft nicht möglich ist. Außerdem wurden in Energieversorgungsnetzen während den letzten Jahren eine Vielzahl von dezentralen elektrischen Generatoren installiert, bei denen es sich oftmals um solche handelt, die elektrische Energie aus regenerativen Quellen erzeugen (z.B. Photovoltaik, Windkraftanlagen). Bei solchen Generatoren ist die erzeugte elektrische Leistung nicht konstant, sondern schwankt mit der Zeit und lässt sich nicht sicher voraussagen. Aus diesem Grund lässt sich im Unterschied zu früheren Energieversorgungsnetzen, in denen üblicherweise ein unidirektionaler Energiefluss von wenigen zentralen Kraftwerken zu weitgehend konstanten Lasten erfolgte, eine zur Ermittlung der unbekannten Knotenspannungen erforderliche Lastflussberechnung nur mit großem rechnerischen Aufwand durchführen.

Beispielsweise sind solche Zustandswerte im Rahmen einer Netzplanung notwendig, wenn bewertet werden soll, ob eine in einem bestehenden Energieversorgungsnetz vorzunehmende Maßnahme, z.B. der Einbau einer FACTS-Anlage (Flexible AC Transmission System) oder einer HGÜ-Leitung (Hochspanungs-Gleichstromübertragung), mit positiven Effekten für das gesamte Energieversorgungsnetz behaftet ist. Dazu werden Simulationen durchgeführt, in deren Zusammenhang anhand vorgegebener Einspeisungen und Lasten mittels einer ein mathematisches Netzmodell verwendenden Lastflussberechnung die fehlenden Zustandswerte an denjenigen Knoten ermittelt werden, an denen keine Messgeräte installiert sind. Um eine plausible Bewertung vornehmen zu können, muss der Zeitraum, für den die Simulationen durchgeführt werden, hinreichend lang gewählt werden. Üblicherweise wird als Betrachtungszeitraum ein Jahr gewählt. Bei einer zeitlichen Auflösung der Zustandswerte von einer Stunde bzw. einer Viertelstunde muss die Lastflussberechnung im Rahmen der Simulation 8760 bzw. 35040 mal wiederholt werden, wodurch ein hoher rechnerischer Aufwand generiert wird. Anhand der ermittelten Zustandswerte kann dann eine Güte der geplanten Maßnahme geprüft werden, indem die Anzahl auftretender Spannungsbandverletzungen bzw. Überströme festgestellt wird.

Ähnliche Betrachtungen müssen zur Dimensionierung von Kabeln, Leitungen und Transformatoren durchgeführt werden. Die Betriebsmittel müssen dabei derart gewählt werden, dass sie den ermittelten Knotenspannungen und Zweigströmen standhalten.

Auch im Rahmen der Automatisierung von Niederspannungsnetzen, in denen aus Kostengründen oftmals keine flächendeckende Sensorik installiert wird, können Schätzungen von Zustandswerten einen vorteilhaften Effekt bringen. So können Zustandswerte unabhängig von installierter Messtechnik für alle Netzknoten und Zweige des Niederspannungsnetzes ermittelt werden, um etwaige unzulässige Betriebszustände (Überströme, Spannungsbandverletzungen) zu erkennen und geeignete Gegenmaßnahmen, z.B. das Schalten eines Stufenschalters in einem regelbaren Transformator, einzuleiten.

Für die Lastflussberechnung werden üblicherweise iterative Verfahren, z.B. das Newton-Raphson-Verfahren, eingesetzt, zu deren Durchführung ein hoher Rechenaufwand der eingesetzten Datenverarbeitungseinrichtung erforderlich ist. Insbesondere bei der Automatisierung von Niederspannungsnetzen stehen jedoch nur Steuereinrichtungen (z.B. Fernwirkeinrichtungen, sogenannte "Remote Terminal Units") mit vergleichsweise niedriger Rechenleistung zur Verfügung und der Einsatz von leistungsfähigeren Geräten würde mit hohen Kosten verbunden sein.

Aufgabe der Erfindung ist es damit, ein Verfahren bereitzustellen, mit dem eine Ermittlung von Zustandswerten eines Energieversorgungsnetzes mit vergleichsweise geringen Anforderungen an die Rechenleistung eines das Verfahren ausführenden Gerätes durchgeführt werden kann. Außerdem ist es eine Aufgabe der Erfindung, eine entsprechende Steuereinrichtung sowie ein entsprechendes System anzugeben.

Zur Lösung dieser Aufgabe wird ein Verfahren mit den Merkmalen gemäß Anspruch 1 bereitgestellt.

Supportvektormaschinen dienen zur Klassifikation und Regression von Eingangswerten und können durch ein Training derart angelernt werden, dass sie zu eingangsseitig vorgegebenen Eingangssignalen die zugehörigen Ausgangssignale in Form der gesuchten Zustandswerte ermitteln. Alternativ können auch sogenannte Gauß-Prozesse zur Regression verwendet werden, um aus den Eingangssignalen die Zustandswerte zu ermitteln. Künstliche neuronale Netze sind informationstechnische Strukturen, die einen funktionalen Zusammenhang zwischen Eingangssignalen (z.B. einem Eingangsvektor E) und Ausgangssignalen (z.B. einem Ausgangsvektor A) durch ein entsprechendes Training "lernen" können:

$$A = f(E).$$

Ein künstliches neuronales Netz besteht dabei aus mehreren Neuronen, die untereinander verbunden sind. Die Neuronen sind üblicherweise in mehreren Schichten angeordnet. Eine erste Schicht wird dabei durch eine Eingangsschicht von Neuronen gebildet, an der die einzelnen Elemente der Eingangssignale angelegt werden; jedem Neuron der Eingangsschicht wird dabei üblicherweise ein Element des Eingangssignals zugeführt. Ausgangsseitig weist das künstliche neuronale Netz eine Ausgangsschicht auf, deren Neuronen jeweils einzelne Elemente der Ausgangssignale repräsentieren. Zwischen der Eingangs- und der Ausgangsschicht liegen eine oder mehrere Schichten sogenannter "versteckter Neuronen" ("Hidden Layers" bzw. "Hidden Neurons"). Die Neuronen der Eingangsschicht sind mit allen oder ausgesuchten Neuronen der ersten Schicht versteckter Neuronen verbunden. Diese sind wiederum mit allen oder ausgewählten Neuronen einer etwaigen zweiten Schicht versteckter Neuronen verbunden, usw.. Die letzte Schicht versteckter Neuronen ist schließlich mit den Neuronen der Ausgangsschicht verbunden. Das Verhalten eines neuronalen Netzes und damit die Antwort der Neuronen der Ausgangsschicht auf an die Neuronen der Eingangsschicht angelegte Signale wird durch Trainingsparameter definiert. Diese stellen beispielsweise Schwellenwerte dar, ab denen ein Neuron ein Signal an ein nachfolgendes Neuron abgibt, und/oder Gewichtungsfaktoren für die Wahrscheinlichkeit einer Signalübertragung zwischen zwei bestimmten aufeinanderfolgenden Neuronen.

Zum Anlernen (auch als "Trainieren" bezeichnet) existieren generell mehrere dem Fachmann an sich bekannte Methoden. Gemäß der sogenannten "Multilayer-Perceptron" Methode wird dem neuronalen Netz zunächst neben einer Reihe von Eingangsvektoren eine Reihe von Ausgangsvektoren, von denen bekannt ist, dass sie zu den Eingangsvektoren passen, präsentiert. Die von dem neuronalen Netz berechneten Ausgangsvektoren werden mit den vorgegebenen Ausgangsvektoren verglichen. Die Abweichungen zwischen den berechneten und den erwarteten Werten werden ausgewertet und genutzt, um die Parameter des Berechnungsalgorithmus des neuronalen Netzes zu modifizieren (auch als "Backpropagation" bezeichnet). Das Training ist beendet, sobald die Berechnungsergebnisse des neuronalen Netzes hinreichend genau mit den erwarteten Werten übereinstimmen.

Mit der erfindungsgemäßen Lösung können die Zustandswerte in Form von Knotenspannungen mit vergleichsweise geringem rechnerischen Aufwand ermittelt werden, da die Ausführung eines entsprechend angelernten künstlichen mathematischen Systems keine so hohen Anforderungen an die Rechenleistung einer Datenverarbeitungseinrichtung richtet wie die Ausführung eines iterativen Lastflussberechnungsprogramms. Erfindungsgemäß werden die Leistungswerte als Eingangsvektor direkt am Eingang des fraglichen künstlichen mathematischen Systems angelegt; die gesuchten Knotenspannungen ergeben sich dann als Ausgangsvektor direkt an dessen Ausgang. Anhand der ermittelten Knotenspannungen können beispielsweise Spannungsbandverletzungen erkannt werden.

Erfindungsgemäß ist vorgesehen, dass die Leistungswerte unter Verwendung von exogenen Eingangssignalen ermittelt werden, die einen in dem Bereich des jeweiligen Knotens des Energieversorgungsnetzes vorliegenden Umgebungszustand angeben.

Die Erfindung eignet sich besonders gut im Rahmen einer Regelung und Überwachung eines Energieversorgungsnetzes (z.B. eines Niederspannungsnetzes) mit einer Steuereinrichtung während des Betriebs des Energieversorgungsnetzes. Als exogene Eingangssignale werden hier solche Signale verstanden, die außerhalb des Energieversorgungsnetzes verursacht worden sind, also keine elektrischen Messgrößen des Energieversorgungsnetzes selbst darstellen. Hierbei wird in vorteilhafter Weise die Erkenntnis genutzt, dass sich der Betriebszustand des Energieversorgungsnetzes hinreichend genau aus wenigen exogenen Eingangssignalen ermitteln lässt.

Außerdem ist erfindungsgemäß vorgesehen, dass die Leistungswerte aus den exogenen Eingangssignalen unter Verwendung eines entsprechend angelernten zweiten künstlichen mathematischen Systems ermittelt werden.

Hierbei werden die Knotenspannungen des Energieversorgungsnetzes folglich mittels eines zweistufigen Prozesses ermittelt, wobei auf jeder Stufe ein künstliches mathematisches System eingesetzt wird. Zunächst werden anhand der exogenen Eingangssignale die Leistungswerte an den einzelnen Netzknoten mit dem zweiten künstlichen mathematischen System ermittelt. Liegen diese vor, so können sie wiederum an den Eingang des ersten künstlichen mathematischen Systems angelegt werden und von diesem zur Ermittlung der gesuchten Knotenspannungen verwendet werden.

Gemäß einer vorteilhaften Ausführungsform des erfindungsgemäßen Verfahrens ist vorgesehen, dass bei Kenntnis der Knotenspannungen an allen Knoten des Energieversorgungsnetzes die auf den von den Knoten abgehenden Zweigen fließenden Zweigströme ermittelt werden.

Somit lassen sich in einem der Bestimmung der Knotenspannungen nachgelagerten Schritt weitere Zustandswerte in Form von Zweigströmen im Energieversorgungsnetz bestimmen. Anhand der ermittelten Zweigströme können beispielsweise auftretende Überströme erkannt werden.

Konkret kann gemäß einer vorteilhaften Ausführungsform des erfindungsgemäßen Verfahrens in diesem Zusammenhang vorgesehen sein, dass als exogene Eingangssignale ein oder mehrere der folgenden Signale verwendet werden:

- ein das aktuelle Wetter im Bereich des jeweiligen Knotens angebendes Wettersignal (ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen);

- ein die aktuelle Uhrzeit angebendes Zeitsignal;

- ein die Art des aktuellen Tages angebendes Tagesartsignal (ein solches Tagesartsignal kann beispielsweise angeben, ob es sich um einen Wochentag, einen Samstag, einen Sonntag, einen Feiertag, einen Arbeitstag etc. handelt);

- ein eine Erzeugungs- und/oder Verbrauchscharakteristik zumindest einer typischen Quelle und/oder Last in dem Teilnetz angebendes Referenzsignal (ein solches Referenzsignal gibt Zeitreihen (normierter) elektrischer Leistungen eines oder mehrerer Erzeuger bzw. Verbraucher an, die typischerweise ins Netz eingespeist bzw. aus diesem entnommen werden);

- ein einen Schaltzustand von Schalteinrichtungen im energieversorgungsnetz angebendes Schaltzustandssignal (ein solches Schaltzustandssignal kann beispielsweise angeben, ob eine manuell oder automatisch bedienbare Schalteinrichtung oder eine Sicherung den Strom leitet oder unterbricht).

Die genannten Signale sind für sich genommen oder in Kombination dazu geeignet, Größen zu beschreiben, die den Betriebszustand, insbesondere das Verhalten der Lasten und/oder der Quellen, des Energieversorgungsnetzes beeinflussen. Die Signale können dabei lokal im Bereich des Energieversorgungsnetzes (z.B. mittels entsprechender Sensoren einer Ortsnetzstation) aufgenommen und/oder von externen Systemen (z.B. Wetterdiensten) bezogen werden.

Befinden sich beispielsweise regenerative Energieerzeuger in Form von Photovoltaikanlagen oder Windkraftanlagen in dem Teilnetz, ist deren Einspeisung elektrischer Energie abhängig vom im Bereich des Energieversorgungsnetzes herrschenden Wetter, beispielsweise Sonneneinstrahlung (für Photovoltaik) und Windrichtung und Windstärke (für Windkraftanlagen). Diese Informationen können z.B. einer das Verfahren ausführenden Steuereinrichtung als Wettersignal zugeführt werden.

Daneben existieren weitere Einflüsse. Beispielsweise hängt das Lastverhalten signifikant von der Tagesart ab. So liegen Lastspitzen an normalen Wochentagen (Arbeitstage) in bestimmten, relativ genau vorhersagbaren Zeitfenstern, während sie am Wochenende durch ein verschiedenes Verbraucherverhalten in anderen Zeitfenstern liegen. Unter Verwendung entsprechender Uhrzeit- und Tagesartsignale kann eine Abschätzung der Leistungswerte im Energieversorgungsnetz vorgenommen werden.

Durch die Verwendung von Informationen über die Schaltzustände von Schalteinrichtungen (inkl. Sicherungen) können Einflüsse durch unterschiedliche Lastflüsse im Energieversorgungsnetz berücksichtigt werden. Außerdem können Abschaltungen bzw. Zuschaltungen einzelner Abschnitte des Energieversorgungsnetzes in die Abschätzung einfließen.

Eine besonders gute Abschätzung kann natürlich dann getroffen werden, wenn mehrere der beschriebenen Signale als Eingangssignal miteinander kombiniert werden (z.B. ein Wettersignal und ein Tagesartsignal). Hierdurch lassen sich verschiedene Einflüsse auf Lasten und Quellen in dem Energieversorgungsnetz berücksichtigen. Die Auswahl der jeweils geeigneten Signale wird sich von Energieversorgungsnetz zu Energieversorgungsnetz unterscheiden und ist z.B. von der Art und Menge der Quellen und Lasten sowie dem Vorhandensein etwaiger Messsensoren im abhängig.

Gemäß einem vorliegend nicht beanspruchten Beispiel könnte sein, dass zum Training des ersten künstlichen mathematischen Systems ein Datenverarbeitungssystem verwendet wird, das unter Verwendung eines Lastflussberechnungsprogramms Trainingspaare aus bekannten Leistungswerten und zugehörigen Knotenspannungen berechnet, wobei das Lastflussberechnungsprogramm eine mathematische Modellierung des Energieversorgungsnetzes verwendet. Mit den Trainingspaaren wird zunächst ein drittes künstliches mathematisches System unter Bildung von Trainingsparametern angelernt, dessen Struktur mit derjenigen des ersten künstlichen mathematischen Systems übereinstimmt, und die Trainingsparameter werden an das erste künstliche mathematische System übertragen und unter Abschluss des Trainings von diesem übernommen.

Bei diesem Beispiel findet das Training des ersten künstlichen mathematischen Systems auf einem leistungsfähigen Datenverarbeitungssystem statt, auf dem ein drittes künstliches mathematisches System implementiert ist, dessen Struktur mit der des ersten künstlichen mathematischen Systems übereinstimmt. Durch Vorgabe von Trainingspaaren in Form von Leistungswerten einerseits und zugehörigen Knotenspannungen andererseits kann das dritte künstliche mathematische System derart trainiert werden, dass es zu den eingangsseitig angelegten Leistungswerten die erwarteten Knotenspannungen ermittelt. Wenn die aus den vorgegebenen Leistungswerten ermittelten Knotenspannungen hinreichend genau mit den Knotenspannungen aus den Trainingspaaren übereinstimmen, wird die Trainingsphase beendet und das dritte künstliche mathematische System ist entsprechend angelernt. Die dabei festgelegten Trainingsparameter können anschließend an das erste künstliche mathematische System übermittelt und von diesem übernommen werden, so dass durch die übernommenen Trainingsparameter auch das erste künstliche mathematische System entsprechend zur Ermittlung von Knotenspannungen aus Leistungswerten angelernt ist.

Eine dazu alternative Ausführungsform des erfindungsgemäßen Verfahrens sieht vor, dass zum Training des ersten künstlichen mathematischen Systems ein Datenverarbeitungssystem verwendet wird, das unter Verwendung bekannter Leistungswerte und einer Optimierungsfunktion zunächst ein drittes künstliches mathematisches System unter Bildung von Trainingsparametern anlernt, dessen Struktur mit derjenigen des ersten künstlichen mathematischen Systems übereinstimmt. Dabei stellt die Optimierungsfunktion eine Verlustfunktion dar, die in Abhängigkeit von den Leistungswerten und den zugehörigen Knotenspannungen berechnet wird und die eine die Admittanzen des Energieversorgungsnetzes berücksichtigende Leistungsfluss-Abbildung zur Verknüpfung der Knotenspannungen und der Leistungswerte umfasst. Auch bei dieser Ausführungsform werden anschließend die Trainingsparameter an das erste künstliche mathematische System übertragen und unter Abschluss des Trainings von diesem übernommen.

Bei dieser Ausführungsform wird zum Training des künstlichen mathematischen Systems ein sogenannter "Autoencoder" verwendet. Dabei werden als Trainingspaare anstelle von Leistungswerten und entsprechenden Knotenspannungen nunmehr nur noch die Leistungswerte und eine Optimierungsfunktion angegeben, die den elektrischen Zusammenhang zwischen Leistungswerten und Knotenspannungen beschreibt. Das Training des künstlichen mathematischen Systems erfolgt dann quasi derart, dass aus den Leistungswerten durch das künstliche mathematische System zugehörige Knotenspannungen ermittelt werden, die daraufhin unter Verwendung der Optimierungsfunktion wieder zurück in Leistungswerte umgerechnet werden. Quasi wird durch das Training des dritten künstlichen mathematischen Systems in diesem Fall eine zu der Leistungsfluss-Abbildung inverse Funktion ermittelt. Wenn die am Ende ermittelten Leistungswerte mit den am Anfang vorgegebenen Leistungswerten hinreichend genau übereinstimmen, wird die Trainingsphase beendet und das dritte künstliche mathematische System ist entsprechend angelernt. Die dabei festgelegten Trainingsparameter können anschließend an das erste künstliche mathematische System übermittelt und von diesem übernommen werden, so dass durch die übernommenen Trainingsparameter auch das erste künstliche mathematische System entsprechend zur Ermittlung von Knotenspannungen aus Leistungswerten angelernt ist.

Gemäß einer weiteren vorteilhaften Ausführungsform des erfindungsgemäßen Verfahrens kann im Zusammenhang mit einem solchen externen Training des ersten künstlichen mathematischen Systems zudem vorgesehen sein, dass das erste künstliche mathematische System auf einem Feldgerät implementiert ist, dessen Rechenleistung geringer ist als die Rechenleistung des Datenverarbeitungssystems.

Die Ausführung des ersten künstlichen mathematischen Systems ist nämlich auch mittels einer Datenverarbeitungseinrichtung mit vergleichsweise geringer Rechenleistung möglich, so dass es auch auf einem Feldgerät, beispielsweise einem Fernwirkgerät, implementiert sein kann, dessen Rechenleistung üblicherweise beschränkt ist.

Die oben genannte Aufgabe wird auch durch eine Steuereinrichtung gemäß dem unabhängigen Vorrichtungsanspruch gelöst.

Hinsichtlich der erfindungsgemäßen Steuereinrichtung gelten alle zu dem erfindungsgemäßen Verfahren voranstehend und nachfolgend gemachten Ausführungen und umgekehrt in entsprechender Weise, insbesondere ist die erfindungsgemäße Steuereinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Steuereinrichtung wird auf die zu dem erfindungsgemäßen Verfahren beschriebenen Vorteile verwiesen.

Gemäß einer vorteilhaften Weiterbildung der erfindungsgemäßen Steuereinrichtung kann vorgesehen sein, dass die Steuereinrichtung Bestandteil einer Ortsnetzstation oder eines Kabelverteilers des Energieversorgungsnetzes ist.

Üblicherweise umfasst eine Ortsnetzstation einen oder mehrere Transformatoren sowie Schaltgeräte, Steuerelektronik und ggf. Sensoren und Kommunikationstechnik. Die erfindungsgemäße Steuereinrichtung lässt sich daher sehr einfach in die ohnehin vorhandenen Komponenten integrieren. Zusätzlich können lokale Sensoren an der Ortsnetzstation vorgesehen sein, mit denen Wetterinformationen im Bereich des Teilnetzes erfasst und als Wettersignal an die Steuereinrichtung weitergegeben werden. Alternativ können solche Informationen auch von externen Dienstanbietern übernommen werden. Eine Uhrzeitinformation und Angabe einer Tagesart kann zudem über einen integrierten oder externen Zeitgeber erfolgen. Kabelverteiler bzw. Kabelverteilerschränke dienen zur Unterverteilung der elektrischen Energie an Endabnehmer im Verteilnetz.

Hinsichtlich des Systems wird die oben genannte Aufgabe schließlich durch ein System zum Ermitteln von Zustandswerten eines elektrischen Energieversorgungsnetzes gelöst.

Erfindungsgemäß ist vorgesehen, dass das das System eine Steuereinrichtung nach einem der Ansprüche 6 oder 7 und ein Datenverarbeitungssystem aufweist, das dazu eingerichtet ist, zum Trainieren des ersten künstlichen mathematischen Systems ein drittes künstliches mathematisches System, dessen Struktur mit derjenigen des ersten künstlichen mathematischen Systems übereinstimmt, unter Verwendung eines Verfahrens gemäß Anspruch 4 anzulernen.

Hinsichtlich des erfindungsgemäßen Systems gelten alle zu dem erfindungsgemäßen Verfahren und der erfindungsgemäßen Steuereinrichtung voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet.

Auch hinsichtlich der Vorteile des erfindungsgemäßen Systems wird auf die zu dem erfindungsgemäßen Verfahren und der erfindungsgemäßen Steuereinrichtung beschriebenen Vorteile verwiesen.

Die Erfindung wird nachfolgend anhand von Ausführungsbeispielen näher erläutert. Die spezifische Ausgestaltung der Ausführungsbeispiele ist für die allgemeine Ausgestaltung des erfindungsgemäßen Verfahrens und der erfindungsgemäßen Einrichtung in keiner Weise einschränkend zu verstehen; vielmehr können einzelne Ausgestaltungsmerkmale der Ausführungsbeispiele in beliebiger Weise frei untereinander und mit den voranstehend beschriebenen Merkmalen kombiniert werden. In den Figuren verwendete identische Bezugszeichen bezeichnen dabei übereinstimmende oder vergleichbare Merkmale.

Hierzu zeigen

Figur 1    ein Ablaufschema eines Verfahrens zur Ermittlung von Zustandswerten eines elektrischen Energieversorgungsnetzes;

Figur 2    eine schematische Darstellung eines elektrischen Energieversorgungsnetzes mit einer Steuereinrichtung;

Figur 3    eine detailliertere Darstellung der Steuereinrichtung;

Figur 4    ein System mit einer Steuereinrichtung eines Energieversorgungsnetzes und einem Datenverarbeitungssystem;

Figur 5    ein Ablaufschema eines Hintergrundbeispiels zum Trainieren eines künstlichen neuronalen Netzes;

Figur 6    ein Ablaufschema eines Ausführungsbeispiels zum Trainieren eines künstlichen neuronalen Netzes;

Figur 7    eine schematische Blockdarstellung zur Erläuterung des Trainings eines neuronalen Netzes mit einem Autoencoder;

Figur 8    ein Diagramm zur Erläuterung des Zeitbedarfs zur Ermittlung von Zustandswerten.

Durch den zunehmenden Einsatz von dezentralen Erzeugern und Speichern sowie neuen elektrischen Verbrauchern (z.B. Wärmepumpen, Elektrofahrzeuge) ist zu erwarten, dass die Vorgänge in Energieversorgungsnetzen, insbesondere in Niederspannungsnetzen, dynamischer und schlechter vorhersagbar werden. Es kann davon ausgegangen werden, dass der Aufwand zur Einhaltung der zulässigen Spannungsgrenzen sowie der thermischen Strombelastungen der Kabel und Leitungen in Zukunft steigt und Energieversorgungsnetze noch flächendeckender überwacht werden müssen. Da nicht an allen Knoten eines Energieversorgungsnetzes Messgeräte zur Erfassung von Strömen und/oder Spannungen vorgesehen werden können, müssen elektrische Zustandswerte zur Beschreibung des Betriebszustands des Energieversorgungsnetzes (z.B. Knotenspannungen, Zweigströme) oftmals geschätzt werden. Um Zustandswerte eines Energieversorgungsnetzes zu schätzen wird bisher eine sogenannte Lastflussrechnung durchgeführt.

Ein elektrisches Netz besteht im Wesentlichen aus Zweigen (Leitungen und Kabeln) und Netzknoten (Sammelschienen, Muffen, Verteilerkästen). An den Netzknoten sind die einzelnen Lasten (Haushalte, Gewerbe, etc.) und Erzeuger (Photovoltaikerzeuger, BHKWs) angeschlossen. Das Lastflussproblem besteht darin, mit Kenntnis der Netztopologie und Leitungsparameter aus bekannten Leistungsentnahmen bzw. -einspeisungen an den Netzknoten die Spannungen an den Knoten und in einem nachgelagerten Schritt die Ströme in allen Zweigen zu berechnen.

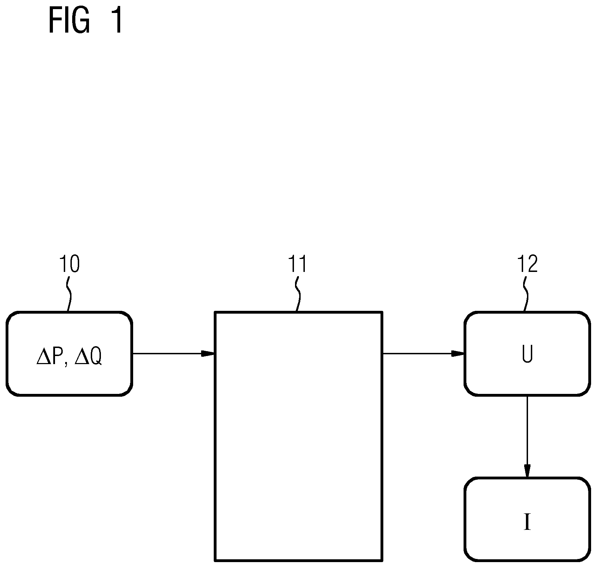

Figur 1 zeigt schematisch die Eingabe- und Ausgabegrößen einer Lastflussrechnung zur Ermittlung von Zustandswerten eines Energieversorgungsnetzes. In einem ersten Schritt 10 werden die Leistungswerte $\Delta P$, $\Delta Q$, also Einspeisungen und/oder Entnahmen elektrischer Energie (Wirkleistung P und Blindleistung Q) für jeden Netzknoten des Energieversorgungsnetzes bereitgestellt. In einem nachgelagerten Schritte 11 findet eine Lastflussberechnung statt. Details zur Lastflussberechnung werden später erläutert. Als Ergebnis der Lastflussberechnung werden in Schritt 12 Zustandswerte in Form von Knotenspannungen U erhalten, mit deren Kenntnis sich schließlich weitere Zustandswerte in Form von Zweigströmen I berechnen lassen.

Zustandswerte zur Beschreibung eines elektrischen Betriebszustands werden bei Planung und Betrieb eines Energieversorgungsnetzes zu verschiedensten Zwecken benötigt. Wie bereits erläutert, werden sie beispielsweise zur Bewertung von Umbau- und Ausbaumaßnahmen bestehender Energieversorgungsnetze sowie zur Planung und Dimensionierung von Komponenten eines zu errichtenden Energieversorgungsnetzes oder -netzteils benötigt.

Außerdem werden sie beim Betrieb eines Energieversorgungsnetzes zur Überwachung des aktuellen Betriebszustands benötigt. Insbesondere wenn keine flächendeckende Sensorik vorhanden ist, wie dies beispielsweise in Niederspannungsverteilnetzen und einigen Mittelspannungsnetzen der Fall ist, wird zudem eine Schätzung der fehlenden Zustandswerte durchgeführt, für die bisher eine aufwendige Lastflussrechnung mit iterativem Ansatz verwendet worden ist. Die Lösung eines Lastflussproblems ist nämlich durch ein nichtlineares Gleichungssystem gegeben ist, dessen Lösung relativ rechenaufwändig ist und ein iteratives Lösungsverfahren (z.B. das Newton-Raphson-Verfahren) erfordert. Daher kann die Lastflussrechnung nicht ohne Weiteres auf einem kleinen Feldgerät mit niedriger Rechenleistung wie es typischerweise in der Ortsnetz- bzw. Transformatorstation installiert ist, durchgeführt werden. Besonders wenn der zu berechnende Netzteil groß ist, d.h. viele Knoten hat, oder wenn die Rechnung in sehr kurzen Zyklen wiederholt werden soll, kann die fehlende Rechenleistung limitierend wirken. Umgekehrt ist eine flächendeckende Ausrüstung von Energieversorgungsnetzen, insbesondere im Niederspanungsbereich, mit leistungsstärkeren Rechnern kostenintensiv. Darüber hinaus setzen die klassischen Netzberechnungsverfahren die vollständige Modellierung der Netzeigenschaften voraus. Dazu werden sowohl die Parameter (Leitungslängen, -widerstände, -suszeptibilitäten etc.) als auch die Topologiedaten des Netzes benötigt. Die Erfassung und Pflege dieser Daten ist zeitaufwendig und verursacht Kosten.

Nachfolgend wird ein Verfahren zur Durchführung einer Lastflussberechnung zur Ermittlung von Zustandswerten eines Energieversorgungsnetzes mit vergleichsweise geringem rechenaufwand anhand eines Ausführungsbeispiels beschrieben, das die Schätzung von Zustandswerten im Betrieb eines elektrischen Energieversorgungsnetzes betrifft.

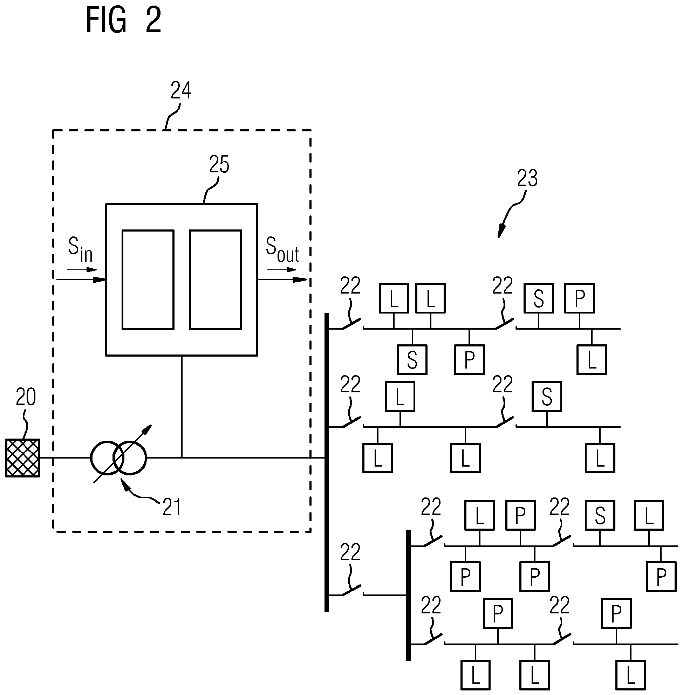

Figur 2 zeigt hierzu in schematischer Darstellung ein elektrisches Energieversorgungsnetz. Mit einem in Figur 2 nur angedeuteten Mittelspannungsnetz 20 ist über einen Transformator 21, der lediglich beispielhaft als regelbarer Transformator ausgeführt ist, ein Teilnetz 23 verbunden, in dem sich jeweils elektrische Lasten L, elektrische Quellen S sowie kombinierte elektrische Lasten und Quellen P (auch als "Prosumer" bezeichnet) sowie Schalteinrichtungen 22 befinden. Elektrische Quellen können beispielsweise dezentrale Energieerzeuger in Form von Windkraftanlagen, Photovoltaikanlagen (PV), Biomassekraftwerken, Blockheizkraftwerken etc. sein. Unter Prosumern sollen kombinierte Lasten und Quellen verstanden werden, also beispielsweise Haushalte mit PV-Modulen zur Stromerzeugung. Prosumer werden nachfolgend sowohl als Lasten als auch als Quellen behandelt. Das Teilnetz 23 kann beispielsweise auf der Niederspannungsebene des Energieversorgungsnetzes liegen. Selbstverständlich sind auch andere Netztopologien als die in Figur 2 dargestellte möglich, insbesondere können mehrere Teilnetze vorhanden sein.

Die Verbindungsstelle zwischen dem Mittelspannungsnetz 20 und dem Teilnetz 23 stellt eine Unterstation bzw. Ortsnetzstation 24 dar. Sie umfasst den regelbaren Transformator 21.

Um den Betrieb des Teilnetzes regeln zu können und insbesondere ungewünschten Betriebszuständen, wie z.B. Spannungsschwankungen, entgegenwirken zu können, ist an der Verbindungsstelle eine dezentrale Steuereinrichtung 25 vorgesehen. Mit dieser können in Abhängigkeit von dem aktuellen Betriebszustand des Teilnetzes 23 Steuersignale erzeugt werden, die beispielsweise zur Ansteuerung des regelbaren Transformators (z.B. zur Optimierung der Stellung eines Stufenschalters) oder zum Zu- oder Abschalten von (in Figur 2 nicht dargestellten) Kondensatorbatterien verwendet werden können. Diese Maßnahmen werden unter anderem zur Spannungsblindleistungskompensation im Teilnetz 23 eingesetzt.

Die dezentrale Steuereinrichtung 21 ist dazu eingerichtet, unter Verwendung von Eingangssignalen $S_{in}$ Steuersignale $S_{out}$ zu bilden, die zur Steuerung von Komponenten des Teilnetzes verwendet werden können. Die Steuersignale $S_{out}$ können hierzu beispielsweise dem regelbaren Transformator 12a zugeführt werden, um eine Stellung seines Stufenschalters zu verändern und so die Spannung in dem Teilnetz 13a zu beeinflussen.

Bei den in Figur 2 angedeuteten Schalteinrichtungen 22 kann es sich um manuell oder automatisch schaltbare Schalter oder um Sicherungen handeln. Der Schaltzustand der Schalteinrichtungen 22 beeinflusst die Topologie des Teilnetzes 23 und die Stromflüsse in dem Teilnetz 23, z.B. indem Abschnitte des Teilnetzes voneinander getrennt oder miteinander verbunden werden.

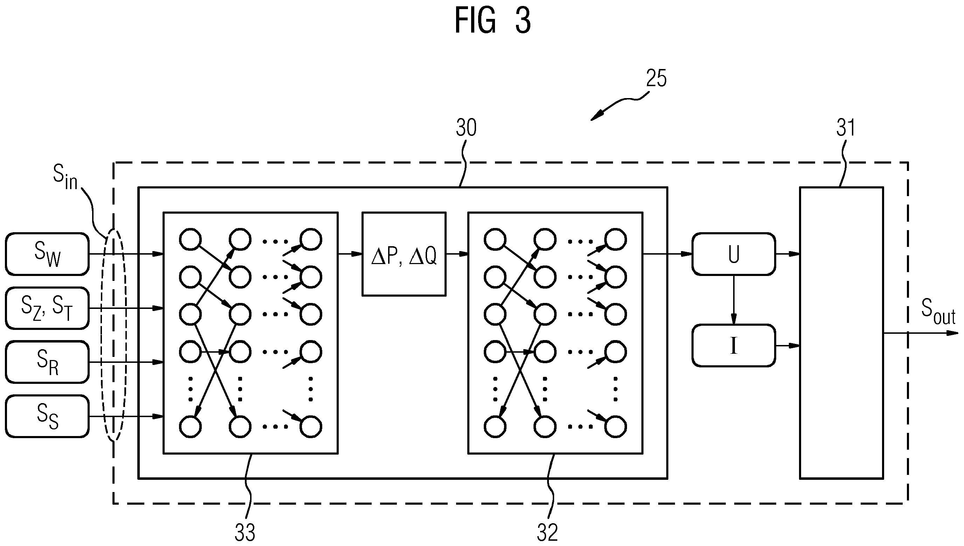

Figur 3 zeigt die Steuereinrichtung 25 in detaillierterer Darstellung. Die Steuereinrichtung 25 umfasst eine Recheneinrichtung mit einer Zustandsschätzeinrichtung 30 und einer Auswerteinrichtung 31. In der Zustandsschätzeinrichtung 30 ist ein in Figur 3 höchstschematisch und lediglich beispielhaft angedeutetes erstes künstliches mathematisches System in Form eines neuronalen Netzes 32 implementiert. Das neuronale Netz 32 ist dazu trainiert, unter Verwendung von Leistungswerten $\Delta P$, $\Delta Q$, die jeweils eine an zumindest zwei Knoten des Energieversorgungsnetzes eingespeiste und/oder abgegebene elektrische Leistung angeben, Knotenspannungen an den einzelnen Knoten des elektrischen Energieversorgungsnetzes zu bestimmen. Die Zustandsschätzeinrichtung 30 umfasst zudem ein zweites künstliches mathematisches System in Form eines zweiten neuronalen Netzes 33, das dazu trainiert ist, aus exogenen Eingangssignalen $S_{in}$ die Leistungswerte $\Delta P$, $\Delta Q$ zu schätzen. Aus den Knotenspannungen lassen sich nachfolgend Zweigströme auf den Zweigen des Teilnetzes 23 bestimmen. Die Zustandswerte in Form von Knotenspannungen und Zweigströmen werden der Auswerteinrichtung 31 zugeführt, die eine Überprüfung durchführt, ob die Zustandswerte auf einen ungewünschten Betriebszustand des Teilnetzes 23 hindeuten. Ein solcher ungewünschter Zustand kann beispielsweise anhand von Spannungsschwankungen erkannt werden. Sofern ein ungewünschter Betriebszustand vorliegt, erzeugt die Auswerteinrichtung 31 ein Steuersignal $S_{out}$ zur Ansteuerung von Komponenten des Teilnetzes 23, wie beispielsweise dem regelbaren Transformator 21.

Bei den Eingangssignalen $S_{in}$ kann es sich um eines oder mehrere der folgenden Signale handeln:

- ein das aktuelle Wetter im Bereich des Teilnetzes 23 angebendes Wettersignal $S_W$ (ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen);

- ein die aktuelle Uhrzeit angebendes Zeitsignal $S_Z$;

- ein die Art des aktuellen Tages angebendes Tagesartsignal $S_T$ (ein solches Tagesartsignal kann beispielsweise angeben, ob es sich um einen Wochentag, einen Samstag, einen Sonntag, einen Feiertag, einen Arbeitstag etc. handelt);

- ein eine Erzeugungs- und/oder Verbrauchscharakteristik zumindest einer typischen Quelle und/oder Last in dem Teilnetz angebendes Referenzsignal $S_R$ (ein solches Referenzsignal gibt Zeitreihen (normierter) elektrischer Leistungen eines oder mehrerer Erzeuger bzw. Verbraucher an, die typischerweise ins Netz eingespeist bzw. aus diesem entnommen werden);

- ein einen Schaltzustand der Schalteinrichtungen 22 im Teilnetz 13a angebendes Schaltzustandssignal $S_S$ (ein solches Schaltzustandssignal kann beispielsweise angeben, ob ein manuell oder automatisch bedienbarer Schalter oder eine Sicherung aktuell den Strom leitet oder unterbricht).

Zur Erfassung der Eingangssignale $S_{in}$ kann die Steuereinrichtung 25 beispielsweise mit lokalen Sensoren (z.B. Sensoren zum Bestimmen von Wetterinformationen im Bereich des Teilnetzes) verbunden sein. Alternativ können alle oder einige Eingangssignale auch von externen Serviceanbietern (z.B. Wetterdiensten) übernommen werden. Dazu kann die Steuereinrichtung 25 mit einer geeigneten Kommunikationseinrichtung ausgestattet sein, um z.B. über ein TCP/IP-Netzwerk eine Internetverbindung herzustellen oder über ein Modem eine Telefonverbindung aufzubauen.

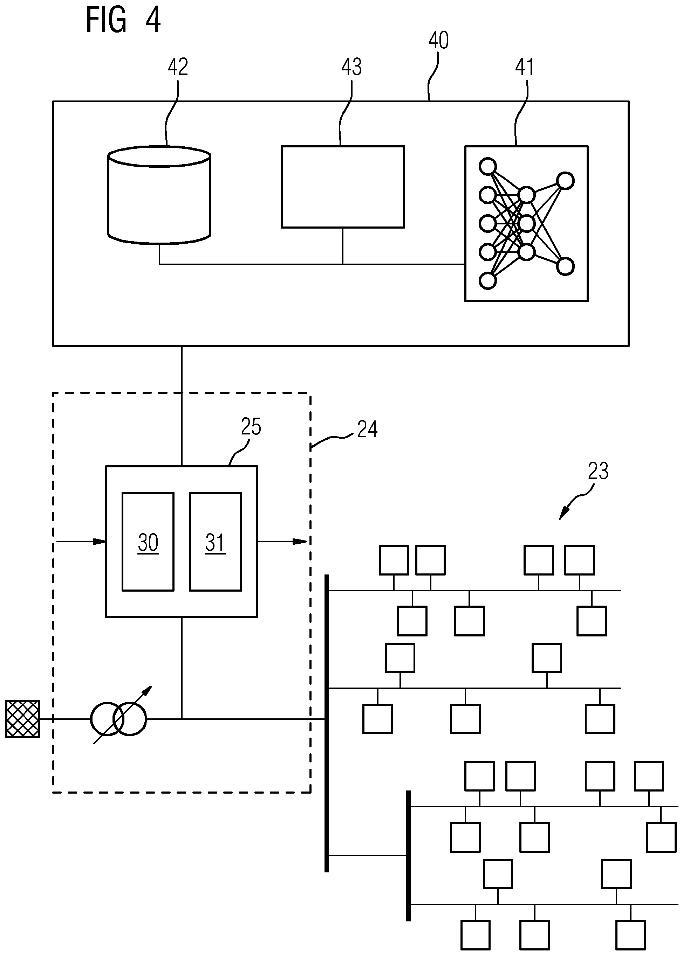

Das Training des neuronalen Netzes 32 wird nicht in der Steuereinrichtung 25 selbst durchgeführt, sondern findet in einem mit der Steuereinrichtung 25 verbundenen zentralen Datenverarbeitungssystem 40 statt (vgl. Figur 4). Hierzu weist das zentrale Datenverarbeitungssystem 40 ein drittes künstliches mathematisches System in Form eines neuronalen Netzes 41 auf, dessen Struktur mit der des ersten neuronalen Netzes 32 übereinstimmt. Außerdem umfasst das zentrale Datenverarbeitungssystem 40 ein Archivsystem 42, in dem historische Eingangssignale gespeichert sind, und eine Recheneinrichtung 43, die Berechnungsprogramme zur Ermittlung des Verhaltens der Lasten und Quellen und des daraus resultierenden Netzzustandes bei Vorliegen bestimmter durch die Leistungswerte angegebener Netzzustände geeignet sind.

Mit dem zentralen Datenverarbeitungssystem 40 wird das dritte neuronale Netz 41 derart trainiert, dass es mit zu dem Teilnetz 23 passenden Leistungswerten den jeweils resultierenden Netzzustand beschreibende Knotenspannungen bildet. Die während dieser Trainingsphase festgelegten Trainingsparameter werden daraufhin an die dezentrale Steuereinrichtung 25 übertragen und dort von der Zustandsschätzeinrichtung 30 für das erste neuronale Netz 32 als Trainingsparameter übernommen. Somit wird dem ersten neuronalen Netz 32 dasselbe Verhalten eingeprägt, das dem dritten neuronalen Netz antrainiert worden ist.

Das Training des neuronalen Netzes kann dabei gemäß der nachfolgend beschriebenen Alternativen stattfinden. Zunächst wird allgemein das Problem der Lastflussberechnung beschrieben. Im Anschluss daran werden die möglichen Trainingsmethoden des neuronalen Netzes 32 dargestellt.

Ein Energieversorgungsnetz kann generell durch eine Menge von Knoten, Zweigen (Leitungen, Kabel), Lasten und Generatoren beschrieben werden. Für ein Energieversorgungsnetz mit N+1 Knoten (der nullte Knoten stellt hierbei einen Referenzknoten dar) ergibt sich eine elektrische Leistungsbilanz wie folgt:

$$S_{d,k} - \sum_r C_{g,kr} S_{gr} = V_k \sum_{k'} Y^*_{bus\,k,k'} V^*_{k'} = 0; \qquad k = 1,2,3,...,N \qquad (1)$$

Dabei bedeuten:

- $S_{d,k}$: komplexe Leistungsaufnahme am Knoten k;
- $C_{g,kr}$: Generatorverknüpfungsmatrix;
- $S_{g,r}$: komplexe Leistungseinspeisung durch Generator r;
- $V_k$: komplexe Spannung am Knoten k;
- $Y_{bux\,k,k}$: komplexe Bus-Admittanz Matrix;

- *: konjugiert komplexe Darstellung.

In einer Matrixschreibweise ergibt sich aus Gleichung 1:

$$S_d - C_g S_g = [V] Y_{bus}^* V^* = 0 \qquad\qquad (2)$$

dabei stellt [V] eine Diagonalmatrix mit Einträgen der Knotenspannungen V auf der Diagonalen dar.

Nachfolgend wird beschrieben, wie ein neuronales Netz zur näherungsweisen Lastflussberechnung in einer rechenleistungsoptimierten Weise verwendet werden kann. Diese Vorgehensweise lässt sich in entsprechender Weise auf andere künstliche mathematische Systeme wie z.B. Supportvektormaschinen oder Gauß-Prozesse zur Regression übertragen. Zur Vereinfachung soll ein Energieversorgungsnetz mit einem Referenzknoten (Knoten 0) angenommen werden, das ansonsten nur PQ-Knoten aufweist.

Der Spannungsvektor aller PQ-Knoten ist hierbei definiert als

$$\vec{V} = \begin{pmatrix} \operatorname{Re} V_1 \\ \vdots \\ \operatorname{Re} V_N \\ \operatorname{Im} V_1 \\ \vdots \\ \operatorname{Im} V_N \end{pmatrix} =: \begin{pmatrix} \vec{V}' \\ \vec{V}'' \end{pmatrix}$$

Der Spannungsvektorraum wird hierbei wie folgt definiert:

$$H_V = \mathbb{R}^{2N}$$

Der Vektor aller Leistungswerte an den PQ-Knoten ist definiert als

$$\vec{S} = \begin{pmatrix} \Delta P_1 \\ \vdots \\ \Delta P_N \\ \Delta Q_1 \\ \vdots \\ \Delta Q_N \end{pmatrix} =: \begin{pmatrix} \Delta \vec{P} \\ \Delta \vec{Q} \end{pmatrix}$$

Dabei stellen $\Delta P_k = P_{d,k} - P_{g,k}$ die Differenz aus entnommener und eingespeister elektrischer Wirkleistung am Knoten k,
$\Delta Q_k = Q_{d,k} - Q_{g,k}$ die Differenz aus entnommener und eingespeister elektrischer Blindleistung am Knoten k dar.

Der Leistungsvektorraum wird zudem wie folgt definiert:

$$H_S = \mathbb{R}^{2N}$$

Außerdem wird für ein Energieversorgungsnetz mit einem Referenzknoten (Index k=0), eine Anzahl N von PQ-Knoten und einer Bus-Admittanz-Matrix

$$Y_{bus} \in \mathbb{C}^N \times \mathbb{C}^N$$

ergibt sich die Leistungsfluss-Abbildung zu

$$F: H_V \rightarrow H_S \;; \quad \vec{V} \rightarrow \left( \begin{matrix} \left[\vec{V}'\right] & \left[\vec{V}''\right] \\ \left[\vec{V}'\right] & \left[\vec{V}''\right] \end{matrix} \right\} \hat{Y}_{P,bus} \vec{V} \\ \left. \begin{matrix} \end{matrix} \right\} \hat{Y}_{Q,bus} \vec{V} \right) \tag{3}$$

wobei sich mit der Bus-Admittanz-Matrix $Y_{bus} = Y'_{bus} + iY''_{bus}$ folgende Ausdrücke ergeben:

$$\hat{Y}_{P,bus} = \begin{pmatrix} Y'_{bus} & -Y''_{bus} \\ Y''_{bus} & Y'_{bus} \end{pmatrix} \;; \quad \hat{Y}_{Q,bus} = \begin{pmatrix} -Y''_{bus} & -Y'_{bus} \\ Y'_{bus} & -Y''_{bus} \end{pmatrix} \tag{4}$$

Damit kann die Leistungsflussgleichung (1) bzw. (2) in der Form

$$\vec{S} = F(\vec{V})$$

geschrieben werden. Als eine Lösung der Leistungsflussgleichung ergibt sich derjenige Vektor $\vec{V}$, für den diese Gleichung gültig ist. Damit entspricht das Lösen der Leistungsflussgleichung der Suche nach der inversen Leistungsfluss-Abbildung

$$G: H_S \rightarrow H_V \;; \quad \vec{S} \rightarrow G(\vec{S}) \tag{5}$$

so dass gilt

$$F(G(\vec{S})) = \vec{S}$$

Die computergestützte Lösung der Leistungsfluss-Abbildung kann sehr schnell ausgeführt werden, da sie lediglich wenige Matrix-Multiplikationen benötigt. Hingegen benötigt die Berechnung der inversen Leistungsfluss-Abbildung, wie es beispielsweise bei einer herkömmlichen Lastflussberechnung durchgeführt wird, eine deutlich höhere Rechenleistung, da hierbei ein iteratives Verfahren, z.B. das Newton-Raphson-Verfahren, angewendet werden muss und eine hohe Anzahl aufwendiger Matrix-Umrechnungen nötig werden.

Die nachfolgend vorgeschlagenen Algorithmen schlagen Vorgehensweisen zur Lösung der Leistungsflussgleichung vor, die mit deutlich geringerem Rechenaufwand auskommen.

Hinsichtlich eines ersten Algorithmus wird zunächst angenommen, dass die Lösung der Leistungsflussgleichung für eine Anzahl $N_{Sample}$ verschiedener Leistungswerte $\{\vec{S}_1, ..., \vec{S}_{N_{Sample}}\}$ gefunden werden soll.

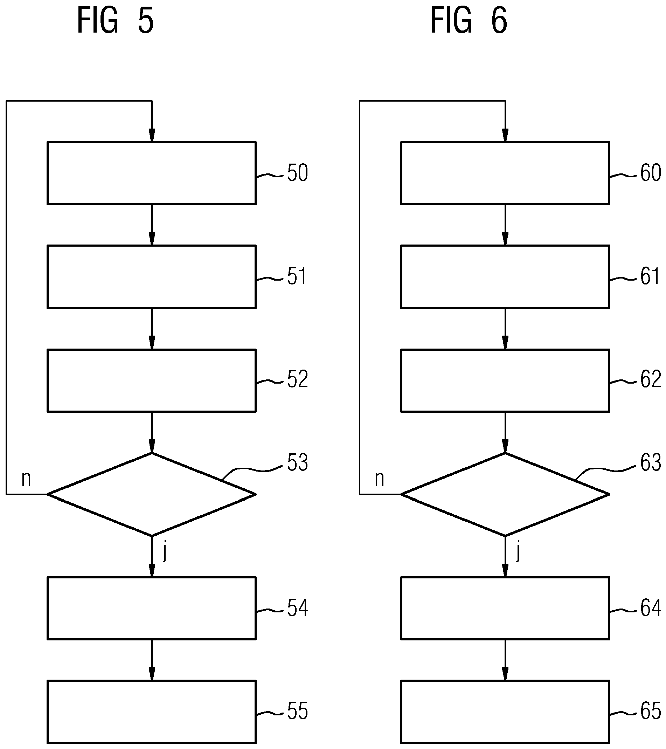

Dazu wird ein künstliches mathematisches System eingesetzt, das im nachfolgenden Beispiel in Form eines künstlichen neuronalen Netzes ausgebildet sein soll. Dieses wird dazu verwendet, um die Lösung der mehrdimensionalen nicht-linearen Abbildung $G: H_S \rightarrow H_V$ zu schätzen. Der Algorithmus umfasst die folgenden Schritte (vgl. Figur 5):

- gemäß einem ersten Schritt 50 wird zufällig eine Anzahl von $N_{training}$ Leistungswerten aus der Menge $N_{sample}$ aller Leistungswerte $\{\vec{S}_1, ..., \vec{S}_{N_{Sample}}\}$ ausgewählt;

- in einem folgenden Schritt 51 werden $N_{training}$ Lösungen der Leistungsflussgleichung mit einem numerischen Leistungsflussberechnungs-Programm berechnet, so dass sich eine Anzahl von $N_{training}$ Trainingspaaren $\{(\vec{S}_1; \vec{V}_1, ..., \vec{S}_{N_{training}}; \vec{V}_{N_{training}}\}$ ergibt. Wenn die Dauer für die Berechnung einer einzelnen Lösung der Leistungsflussgleichung mit $t_{PF,1}$ angenommen wird, ergibt sich für diesen Schritt des Algorithmus ein gesamter Zeitbedarf von $t_{PF} = N_{training} \cdot t_{PF,1}$;

- in einem weiteren Schritt 52 wird ein künstliches neuronales Netz mit den im vorigen Schritt 51 ermittelten Trainingspaaren trainiert. Die hierfür benötigte Zeit ist mit $t_{training}$ gegeben;

- in einem nächsten Schritt 53 wird die Güte des solchermaßen trainierten künstlichen neuronalen Netzes überprüft.

Liefert das neuronale Netz ausgangsseitig ausreichend genaue Werte, so wird das Verfahren bei Schritt 54 fortgesetzt. Ist die Güte hingegen noch nicht ausreichend, so wird das Verfahren bei Schritt 50 fortgesetzt und es werden weitere Trainingspaare erzeugt, um die Anzahl $N_{training}$ zu erhöhen;

- in einem Schritt 54 werden schließlich mit der schnellen Vorwärts-Prediktion des neuronalen Netzes die Lösungen für die restlichen $N_{Sampie}$-$N_{training}$ Leistungswerte zu ermitteln. Wenn die Dauer für die Vorhersage einer einzelnen Lösung mit dem neuronalen Netz als $t_{pred,1}$ angenommen wird, ergibt sich für diesen Schritt des Algorithmus ein gesamter Zeitbedarf von $t_{pred} = (N_{Sample}\text{-}N_{training}) \cdot t_{pred,1}$.

Der Zeitbedarf zur Durchführung des gesamten Algorithmus ergibt sich somit zu

$$\begin{aligned} t_{Alg1} &= t_{PF} + t_{training} + t_{pred} \\ &= t_{PF,1} \cdot N_{training} + t_{training} + (N_{Sample} - N_{training}) \cdot t_{pred,1} \end{aligned}$$

Die bei ausschließlicher Anwendung eines herkömmlichen Lastflussberechnungs-Programms benötigte Zeitdauer ist

$$t^* = t_{PF,1} \cdot N_{Sample}$$

Da die Zeitdauer $t_{PF,1}$ zur Berechnung einer Lösung mit dem herkömmlichen Lastflussberechnungs-Programm signifikant größer ist als die Zeitdauer $t_{pred,1}$ für die Vorhersage einer Lösung mit dem neuronalen Netz, ergibt sich mit steigender Anzahl $N_{Sample}$ eine deutliche Zeitersparnis des vorgeschlagenen Algorithmus im Vergleich zur herkömmlichen Lösung.

Die in Figur 5 beschriebene Trainingsmethode wird auf dem Datenverarbeitungssystem 40 an dem dritten künstlichen neuronalen Netz durchgeführt. Die ermittelten Trainingsparameter werden in einem abschließenden Schritt 55 bereitgestellt und schließlich an die Steuereinrichtung 25 übermittelt und dort von dem ersten künstlichen neuronalen Netz übernommen. Dieses kann dann zur Vorhersage von Zustandswerten im Betrieb des Energieversorgungsnetzes verwendet werden.

Hinsichtlich eines zweiten Algorithmus, der mit einem sogenannten "Autoencoder" arbeitet, wird wiederum angenommen, dass die Lösung der Leistungsflussgleichung für eine Anzahl $N_{Sample}$ verschiedener Leistungswerte $\{\vec{S}_1,...,\vec{S}_{NSample}\}$ gefunden werden soll.

Dazu wird auch beim zweiten Algorithmus ein künstliches mathematisches System in Form eines künstlichen neuronalen Netzes eingesetzt. Dieses wird ebenfalls dazu verwendet, um die Lösung der mehrdimensionalen nichtlinearen Abbildung $G{:}H_S{\rightarrow}H_V$ zu schätzen.

Außerdem wird eine Optimierungsfunktion $L_{PF}$ definiert, bei der es sich um eine Verlustfunktion handelt, die in Abhängigkeit von den Leistungswerten und den zugehörigen Knotenspannungen berechnet wird und die eine die Admittanzen des Energieversorgungsnetzes berücksichtigende Leistungsfluss-Abbildung zur Verknüpfung der Knotenspannungen und der Leistungswerte umfasst:

$$L_{PF}: \mathbb{R}^{2N} \times \mathbb{R}^{2N} \to \mathbb{R}_0^+$$

$$L_{PF}(\vec{S}, \vec{V}) = \left| \vec{S} - F(\vec{V}) \right|^2$$

Der zweite Algorithmus umfasst die folgenden Schritte (vgl. Figur 6):

- gemäß einem ersten Schritt 60 wird zufällig eine Anzahl von $N_{training}$ Leistungswerten aus der Menge $N_{Sample}$ aller Leistungswerte $\{\vec{S}_1,...,\vec{S}_{NSample}\}$ ausgewählt;

- in einem folgenden Schritt 61 werden die ausgewählten Leistungswerte $N_{training}$ jeweils kopiert, so dass sich eine Anzahl von $N_{training}$ Trainingspaaren $\{(\vec{S}_1;\vec{S}_1,...,\vec{S}_{Ntraining};\overline{S}_{Ntraining}\}$ ergibt;

- in einem weiteren Schritt 62 wird ein künstliches neuronales Netz mit den im vorigen Schritt 61 ermittelten Trainingspaaren unter Nutzung der Optimierungsfunktion $L_{PF}$ trainiert. Die hierfür benötigte Zeit ist mit $t_{training}$ gegeben. Details zum Training werden unten erläutert;

- in einem nächsten Schritt 63 wird die Güte des solchermaßen trainierten künstlichen neuronalen Netzes überprüft. Liefert das neuronale Netz ausgangsseitig ausreichend genaue Werte, so wird das Verfahren bei Schritt 64 fortgesetzt. Ist die Güte hingegen noch nicht ausreichend, so wird das Verfahren bei Schritt 60 fortgesetzt und es werden weitere Trainingspaare erzeugt, um die Anzahl $N_{training}$ zu erhöhen;

- in einem Schritt 64 werden schließlich mit der schnellen Vorwärts-Prediktion des neuronalen Netzes die Lösungen für die restlichen $N_{Sample}$-$N_{training}$ Leistungswerte zu ermitteln. Wenn die Dauer für die Vorhersage einer einzelnen Lösung mit dem neuronalen Netz als $t_{pred,1}$ angenommen wird, ergibt sich für diesen Schritt des Algorithmus ein gesamter Zeitbedarf von $t_{pred} = (N_{Sample}$-$N_{training}) \cdot t_{pred,1}$.

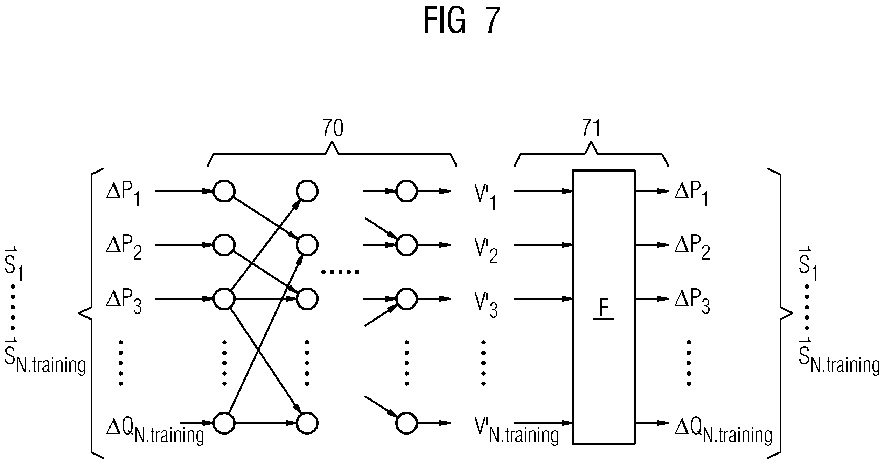

Dies wird anhand von Figur 7 beispielhaft erläutert. Im Schritt 62 stellt das künstliche neuronale Netz quasi die Variable dar, die derart angelernt wird, dass bei vorgegebenen Leistungswerten $S_1,..., S_{N\ training}$ einerseits und vorgegebener Leistungsfluss-Abbildung F andererseits sich quasi die inverse Funktion G der Leistungsfluss-Abbildung als Verhalten des neuronalen Netzes ergibt. Wegen der Definition der Optimierungsfunktion $L_{PF}$ ist dieser Trainingsschritt 62 gleichbedeutend mit dem Training eines Autoencoders mit einer quadratischen Fehlerfunktion. Die "Decoder-Sektion" 71 des Autoencoders ist als Leistungsfluss-Abbildung F fest eingestellt.

Nach dem Training ist die "Encoder-Sektion" 70 des Autoencoders, also das neuronale Netz mit den durch das Training angepassten Trainingsparametern, dazu ausgebildet, die gesuchten Kontenspannungen $V'_1,..., V''_{N\ Sample}$ zu ermitteln.

Der Zeitbedarf zur Durchführung des gesamten zweiten Algorithmus ergibt sich somit zu

$$t_{Alg2} = t_{training} + t_{pred}$$
$$= t_{training} + (N_{Sample}\text{-}N_{training}) \cdot t_{pred,1}$$

Man erkennt, dass im Vergleich zum ersten Algorithmus bei der Durchführung des zweiten Algorithmus die benötigte Zeitdauer um den Term $t_{PF,1} \cdot N_{training}$ verringert worden ist. Dies konnte durch Verwendung eines Autoencoders erreicht werden. Das liegt daran, dass das neuronale Netz - ohne vorherige zeitaufwendige Bildung der beim ersten Algorithmus verwendeten Trainingspaare $\{(\vec{S}_1;\vec{V}_1,...,\vec{S}_{N_{training}};\vec{V}_{N_{training}}\}$ mit einem Lastflussberechnungs-Programm - direkt darauf trainiert wird, die inverse Funktion G der Leistungsfluss-Abbildung F zu lernen.

Auch die in Figur 6 beschriebene Trainingsmethode wird auf dem Datenverarbeitungssystem 40 an dem dritten künstlichen neuronalen Netz durchgeführt. Die ermittelten Trainingsparameter werden in einem abschließenden Schritt 65 bereitgestellt und schließlich an die Steuereinrichtung 25 übermittelt und dort von dem ersten künstlichen neuronalen Netz übernommen. Dieses kann dann zur Vorhersage von Zustandswerten im Betrieb des Energieversorgungsnetzes verwendet werden.

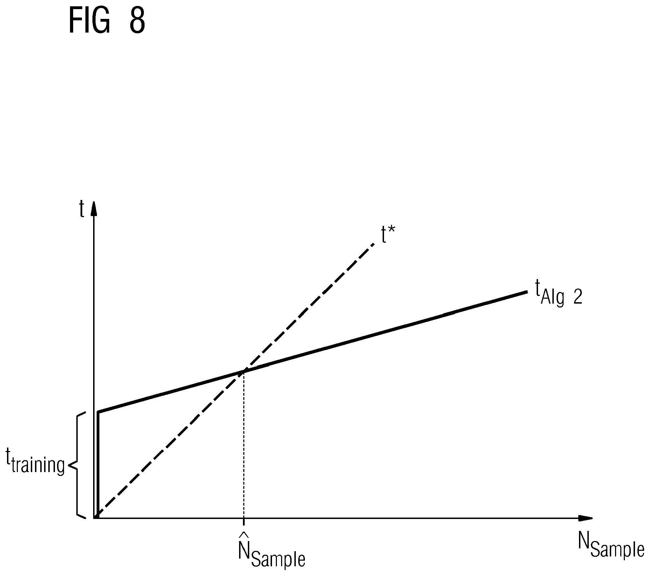

Vergleicht man die beim zweiten Algorithmus für die Berechnung von $N_{Sample}$ Lösungen mit derjenigen Zeitdauer, die bei Anwendung eines herkömmlichen numerischen Lastflussberechnungs-Programms benötigt würde, so ergibt sich eine noch deutlichere Zeitersparnis als bei Anwendung des ersten Algorithmus. In Figur 8 ist hierzu in einem Diagramm die Zeitdauer t in Abhängigkeit der zu berechnenden Lösungen $N_{Sample}$ aufgetragen.

Während die Zeitdauer zur Durchführung des zweiten Algorithmus aufgrund der Trainingsphase mit einem Offset beginnt, nimmt mit steigender Anzahl $N_{Sample}$ von zu berechnenden Lösungen die benötigte Zeitdauer bei Durchführung des herkömmlichen numerischen Lastflussberechnungs-Programms deutlich steiler zu, so dass sich bei einer Anzahl von $N_{Sample}$ für beide Methoden eine Zeitgleichheit ergibt. Mit steigender Anzahl $N_{sample}$ von zu berechnenden Lösungen steigt der Zeitvorteil bei Anwendung des zweiten Algorithmus.

Das beschriebene Training kann von dem Datenverarbeitungssystem 40 in entsprechender Weise auch - sofern gegeben - für das zweite künstliche mathematische System 33 (vergleiche Figur 3) durchgeführt werden.

Die zentrale Datenverarbeitungseinrichtung 40 kann hierzu beispielsweise auch von einem Serviceanbieter z.B. als Cloud-Service betrieben werden.

Im Betrieb kann die dezentrale Steuereinrichtung, sofern in dem Energieversorgungsnetz 23 Sensoren zur Erfassung von elektrischen Parametern vorhanden sind, eine Prüfung durchführen, ob die geschätzten Zustandswerte hinreichend genau mit den durch Messung ermittelten Zustandswerten übereinstimmen. Ist dies nicht der Fall, kann eine erneute Trainingsphase angestoßen werden, um das erste neuronale Netz 32 (und ggf. auch das zweite neuronale Netz 33) der Steuereinrichtung 25 durch Erzeugung und Übernahme neuer Trainingsparameter an etwaige Veränderungen im Verhalten des Energieversorgungsnetzes 23 anzupassen.

Die Komponenten der dezentralen Steuereinrichtung 25 und des Datenverarbeitungssystems 40 können als Hardware oder Software oder eine Kombination aus beidem ausgebildet sein.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden.

**Patentansprüche**

1. Verfahren zum Ermitteln von Zustandswerten eines elektrischen Energieversorgungsnetzes (23) bei einer Regelung und Überwachung des Energieversorgungsnetzes, bei dem

   - unter Verwendung von exogenen Eingangssignalen, die einen in dem Bereich eines jeweiligen Knotens des Energieversorgungsnetzes (23) vorliegenden Umgebungszustand angeben, Knotenspannungen bestimmt werden, die elektrische Spannungen an den jeweiligen Knoten des Energieversorgungsnetzes angeben;

   wobei

   - zur Bestimmung der Knotenspannungen eine Zustandsschätzeinrichtung (30) verwendet wird, die ein künstliches mathematisches System umfasst,

   **dadurch gekennzeichnet, dass**

   - die Zustandsschätzeinrichtung (30) ein erstes künstliches mathematisches System (32) und ein zweites künstliches mathematisches System (33) umfasst, wobei das erste und das zweite künstliche mathematische System derartig hintereinander geschaltete neuronale Netze sind, dass das erste künstliche mathematische System die Ausgangswerte des zweiten künstlichen mathematischen Systems als Eingangswerte verwendet, wobei
   - zunächst aus den exogenen Eingangssignalen unter Verwendung des zweiten künstlichen mathematischen Systems (33) Leistungswerte ermittelt werden, die jeweils eine an zumindest zwei Knoten des Energieversorgungsnetzes (23) eingespeiste und/oder abgegebene elektrische Leistung angeben, und
   - danach unter Verwendung des ersten künstlichen mathematischen Systems die Knotenspannungen unmittelbar aus den an seinem Eingang anliegenden Leistungswerten bestimmt und an seinem Ausgang abgegeben werden, wobei das erste künstliche mathematische System dazu ausgebildet ist, die Lösung einer inversen Leistungsfluss-Abbildung durchzuführen.

2. Verfahren nach Anspruch 1,
   **dadurch gekennzeichnet, dass**

   - bei Kenntnis der Knotenspannungen an allen Knoten des Energieversorgungsnetzes (23) die auf den von den Knoten abgehenden Zweigen fließenden Zweigströme ermittelt werden.

3. Verfahren nach Anspruch 2,
   **dadurch gekennzeichnet, dass**

   - als exogene Eingangssignale ein oder mehrere der folgenden Signale verwendet werden:

     - ein das aktuelle Wetter im Bereich des jeweiligen Knotens angebendes Wettersignal;
     - ein die aktuelle Uhrzeit angebendes Zeitsignal;
     - ein die Art des aktuellen Tages angebendes Tagesartsignal;
     - ein eine Erzeugungs- und/oder Verbrauchscharakteristik zumindest einer typischen Quelle und/oder Last in dem Teilnetz angebendes Referenzsignal;
     - ein einen Schaltzustand von Schalteinrichtungen (22) im Energieversorgungsnetz (23) angebendes Schaltzustandssignal.

4. Verfahren nach einem der Ansprüche 1 bis 3,
   **dadurch gekennzeichnet, dass**

- zum Training des ersten künstlichen mathematischen Systems (32) ein Datenverarbeitungssystem (40) verwendet wird, das unter Verwendung bekannter Leistungswerte und einer Optimierungsfunktion zunächst ein drittes künstliches mathematisches System (41) unter Bildung von Trainingsparametern anlernt, dessen Struktur mit derjenigen des ersten künstlichen mathematischen Systems (32) übereinstimmt, wobei die Optimierungsfunktion eine Verlustfunktion darstellt, die in Abhängigkeit von den Leistungswerten und den zugehörigen Knotenspannungen berechnet wird und die eine die Admittanzen des Energieversorgungsnetzes berücksichtigende Leistungsfluss-Abbildung zur Verknüpfung der Knotenspannungen und der Leistungswerte umfasst; und
- die Trainingsparameter an das erste künstliche mathematische System (32) übertragen und unter Abschluss des Trainings von diesem übernommen werden.

5. Verfahren nach Anspruch 4 ,
**dadurch gekennzeichnet, dass**

- das erste künstliche mathematische System (32) auf einem Feldgerät implementiert ist, dessen Rechenleistung geringer ist als die Rechenleistung des Datenverarbeitungssystems (40) .

6. Steuereinrichtung (25) zum Ermitteln von Zustandswerten eines elektrischen Energieversorgungsnetzes bei einer Regelung und Überwachung des Energieversorgungsnetzes, wobei

- die Steuereinrichtung (25) eine Zustandsschätzeinrichtung (30) aufweist, die dazu eingerichtet ist, unter Verwendung von exogenen Eingangssignalen, die einen in dem Bereich eines jeweiligen Knotens des Energieversorgungsnetzes (23) vorliegenden Umgebungszustand angeben, Knotenspannungen zu bestimmen, die elektrische Spannungen an den jeweiligen Knoten des Energieversorgungsnetzes angeben; wobei
- die Zustandsschätzeinrichtung (30) ein künstliches mathematisches System umfasst,

**dadurch gekennzeichnet, dass** die Zustandsschätzeinrichtung (30) ein erstes künstliches mathematisches System (32) und ein zweites künstliches mathematisches System (33) umfasst, wobei das erste und das zweite künstliche mathematische System derartig hintereinander geschaltete neuronale Netze sind, dass das erste künstliche mathematische System die Ausgangswerte des zweiten künstlichen mathematischen Systems als Eingangswerte verwendet, wobei die Zustandsschätzeinrichtung (30) dazu ausgebildet ist

- zunächst aus den exogenen Eingangssignalen unter Verwendung des zweiten künstlichen mathematischen Systems (33) Leistungswerte zu ermitteln, die jeweils eine an zumindest zwei Knoten des Energieversorgungsnetzes (23) eingespeiste und/oder abgegebene elektrische Leistung angeben, und
- danach unter Verwendung des ersten künstlichen mathematischen Systems die Knotenspannungen unmittelbar aus den an seinem Eingang anliegenden Leistungswerten zu bestimmen und an seinem Ausgang abzugeben, wobei das erste künstliche mathematische System dazu ausgebildet ist, die Lösung einer inversen Leistungsfluss-Abbildung durchzuführen.

7. Steuereinrichtung (25) nach Anspruch 6, **dadurch gekennzeichnet, dass**

- die Steuereinrichtung (25) Bestandteil einer Ortsnetzstation oder eines Kabelverteilerschrankes des Energieversorgungsnetzes (23) ist.

8. System zum Ermitteln von Zustandswerten eines elektrischen Energieversorgungsnetzes (23); **dadurch gekennzeichnet, dass**

- das System eine Steuereinrichtung (25) nach einem der Ansprüche 6 oder 7 aufweist; und
- das System ein Datenverarbeitungssystem (40) aufweist, das dazu eingerichtet ist, zum Trainieren des ersten künstlichen mathematischen Systems (32) ein drittes künstliches mathematisches System (41), dessen Struktur mit derjenigen des ersten künstlichen mathematischen Systems (32) übereinstimmt, unter Verwendung eines Verfahrens gemäß Anspruch 4 anzulernen.

**Claims**

1. Method for determining state values of an electrical energy supply network (23) when controlling and monitoring the energy supply network, in which

- node voltages indicating electrical voltages at the respective nodes of the energy supply network are determined using exogenous input signals indicating an ambient state present in the region of a respective node of the energy supply network (23); wherein
- a state estimation device (30) comprising an artificial mathematical system is used to determine the node voltages,

**characterized in that**

- the state estimation device (30) comprises a first artificial mathematical system (32) and a second artificial mathematical system (33), wherein the first and second artificial mathematical systems are neural networks which are nested in one another in such a manner that the first artificial mathematical system uses the output values from the second artificial mathematical system as input values, wherein
- power values each indicating an electrical power fed in and/or output at at least two nodes of the energy supply network (23) are first of all determined from the exogenous input signals using the second artificial mathematical system (33), and
- the node voltages are then directly determined from the power values present at the input of the first artificial mathematical system using the latter and are output at the output thereof, wherein the first artificial mathematical system is designed to solve an inverse power flow representation.

2. Method according to Claim 1,
   **characterized in that**

   - with knowledge of the node voltages at all nodes of the energy supply network (23), the branch currents flowing in the branches leaving from the nodes are determined.

3. Method according to Claim 2,
   **characterized in that**

   - one or more of the following signals are used as exogenous input signals:

     - a weather signal indicating the current weather in the region of the respective node;
     - a time signal indicating the current time;
     - a type of day signal indicating the type of the current day;
     - a reference signal indicating a production and/or consumption characteristic of at least one typical source and/or load in the subnetwork;
     - a switching state signal indicating a switching state of switching devices (22) in the energy supply network (23).

4. Method according to one of Claims 1 to 3,
   **characterized in that**

   - a data processing system (40) is used to train the first artificial mathematical system (32), which data processing system first of all trains a third artificial mathematical system (41), with the formation of training parameters, using known power values and an optimization function, the structure of which third artificial mathematical system corresponds to that of the first artificial mathematical system (32), wherein the optimization function is a loss function which is calculated on the basis of the power values and the associated node voltages and comprises a power flow representation which takes into account the admittances of the energy supply network and is intended to link the node voltages and the power values; and
   - the training parameters are transmitted to the first artificial mathematical system (32) and are adopted by the latter with the conclusion of training.

5. Method according to Claim 4,
   **characterized in that**

   - the first artificial mathematical system (32) is implemented on a field device, the computing power of which is lower than the computing power of the data processing system (40).

6. Control device (25) for determining state values of an electrical energy supply network when controlling and monitoring the energy supply network, wherein

- the control device (25) has a state estimation device (30) which is configured to determine node voltages indicating electrical voltages at the respective nodes of the energy supply network using exogenous input signals indicating an ambient state present in the region of a respective node of the energy supply network (23); wherein
- the state estimation device (30) comprises an artificial mathematical system,

**characterized in that**

- the state estimation device (30) comprises a first artificial mathematical system (32) and a second artificial mathematical system (33), wherein the first and second artificial mathematical systems are neural networks which are nested in one another in such a manner that the first artificial mathematical system uses the output values from the second artificial mathematical system as input values, wherein the state estimation device (30) is designed
- to first of all determine power values each indicating an electrical power fed in and/or output at at least two nodes of the energy supply network (23) from the exogenous input signals using the second artificial mathematical system (33), and
- to then directly determine the node voltages from the power values present at the input of the first artificial mathematical system using the latter and to output them at the output thereof, wherein the first artificial mathematical system is designed to solve an inverse power flow representation.

7. Control device (25) according to Claim 6,
   **characterized in that**

   - the control device (25) is part of a local network station or a cable distribution cabinet of the energy supply network (23) .

8. System for determining state values of an electrical energy supply network (23);
   **characterized in that**

   - the system has a control device (25) according to either of Claims 6 and 7; and
   - the system has a data processing system (40) which is configured to train a third artificial mathematical system (41), the structure of which corresponds to that of the first artificial mathematical system (32), using a method according to Claim 4, in order to train the first artificial mathematical system (32).

**Revendications**

1. Procédé de détermination de valeurs d'état d'un réseau (23) d'alimentation en énergie électrique lors d'une régulation et d'un contrôle du réseau d'alimentation en énergie, dans lequel

   - en utilisant des signaux d'entrée exogènes, qui indiquent un état ambiant présent dans la région d'un nœud respectif du réseau (23) d'alimentation en énergie, on détermine des tensions de nœud, qui indiquent les tensions électriques aux nœuds respectifs du réseau d'alimentation en énergie ;

   dans lequel

   - pour déterminer les tensions de nœud, on utilise un dispositif (30) d'estimation d'état, qui comprend un système mathématique artificiel,

   **caractérisé en ce que**

   - le dispositif (30) d'estimation d'état comprend un premier système (32) mathématique artificiel et un deuxième système (33) mathématique artificiel, le premier et le deuxième systèmes mathématiques artificiels étant des réseaux neuronaux montés l'un derrière l'autre, de manière à ce que le premier réseau mathématique artificiel utilise les valeurs de sortie du deuxième réseau mathématique artificiel comme valeurs d'entrée, dans lequel
   - on détermine d'abord, à partir des signaux d'entrée exogènes et en utilisant le deuxième système (33) mathématique artificiel, des valeurs de puissance, qui indiquent chacune une puissance électrique injectée et/ou cédée à au moins deux nœuds du réseau (23) d'alimentation en énergie, et
- ensuite, en utilisant le premier système mathématique artificiel, on détermine les tensions de nœud directement à partir des valeurs de puissance s'appliquant à son entrée et on les sort à sa sortie, le premier système mathématique artificiel étant constitué pour effectuer la solution d'une application de flux de puissance inverse.

2. Procédé suivant la revendication 1,
**caractérisé en ce que**

- lorsque l'on connaît les tensions de nœud à tous les nœuds du réseau (23) d'alimentation en énergie, on détermine les courants de branche passant dans les branches issues des nœuds.

3. Procédé suivant la revendication 2,
**caractérisé en ce que**

- on utilise, comme signaux d'entrée exogènes, un ou plusieurs des signaux suivants :

- un signal d'intempérie indiquant le temps en cours dans la région du nœud respectif ;
- un signal de temps indiquant l'heure ;
- un signal de type de jour indiquant le type du jour ;
- un signal de référence indiquant une caractéristique de production et/ou de consommation d'au moins une source typique et/ou une charge dans le réseau partiel ;
- un signal d'état de commutation indiquant un état de commutation de dispositif (22) de commutation dans le réseau (23) d'alimentation en énergie.

4. Procédé suivant l'une des revendications 1 à 3,
**caractérisé en ce que**

- pour l'apprentissage du premier système (32) mathématique artificiel, on utilise un système (4) de traitement de données, qui, en utilisant des valeurs de puissance connues et une fonction d'optimisation, fait d'abord l'apprentissage d'un troisième système (41) mathématique artificiel avec formation de paramètres d'apprentissage, dont la structure coïncide avec celle du premier système (32) mathématique artificiel, la fonction d'optimisation représentant une fonction de perte, que l'on calcule en fonction des valeurs de puissance et des tensions aux nœuds associés et qui comprend, pour la combinaison des tension aux nœuds et des valeurs de puissance, une application de flux de puissance prenant en compte les admittances du réseau d'alimentation en énergie ; et
- les paramètres d'apprentissage sont transmis au premier système (32) mathématique artificiel et sont pris par celui-ci à la fin de l'apprentissage.

5. Procédé suivant la revendication 4,
**caractérisé en ce que**

- le premier système (32) mathématique artificiel est mis en œuvre sur un appareil sur site, dont la puissance de calcul est plus petite que la puissance de calcul du système (40) de traitement de données.

6. Dispositif (25) de commande pour déterminer des valeurs d'état d'un réseau d'alimentation en énergie électrique lors d'une régulation et d'un contrôle du réseau d'alimentation en énergie, dans lequel

- le dispositif (25) de commande a un dispositif (30) d'estimation d'état, conçu pour, en utilisant des signaux d'entrée exogènes, qui indiquent un état ambiant présent dans la région d'un nœud respectif du réseau (23) d'alimentation en énergie, déterminer des tensions aux nœuds, qui indiquent les tensions électriques aux nœuds respectifs du réseau d'alimentation en énergie ;

dans lequel

- le dispositif (30) d'estimation d'état comprend un système mathématique artificiel,

**caractérisé en ce que**

- le dispositif (30) d'estimation d'état comprend un premier système (32) mathématique artificiel et un deuxième système (33) mathématique artificiel, le premier et le deuxième systèmes mathématiques artificiels étant des réseaux neuronaux montés l'un derrière l'autre, de manière à ce que le premier réseau mathématique artificiel utilise les valeurs de sortie du deuxième réseau mathématique artificiel comme valeurs d'entrée, le dispositif (30) d'estimation d'état étant constitué pour

- déterminer d'abord, à partir des signaux d'entrée exogènes et en utilisant le deuxième système (33) mathématique artificiel, des valeurs de puissance, qui indiquent chacune une puissance électrique injectée et/ou cédée à au moins deux nœuds du réseau (23) d'alimentation en énergie, et

- ensuite, en utilisant le premier système mathématique artificiel, pour déterminer les tensions de nœud directement à partir des valeurs de puissance s'appliquant à son entrée et les sortir à sa sortie, le premier système mathématique artificiel étant constitué pour effectuer la solution d'une application de flux de puissance inverse.

7. Dispositif (25) de commande suivant la revendication 6,
   **caractérisé en ce que**

   - le dispositif (25) de commande est une partie constitutive d'un poste local de réseau ou une armoire de distributeur de câble du réseau (23) d'alimentation en énergie.

8. Système de détermination de valeurs d'état d'un réseau (23) d'alimentation en énergie électrique ;
   **caractérisé en ce que**

   - le système a un dispositif (25) de commande suivant l'une des revendications 6 ou 7 ; et
   - le système a un système (40) de traitement de données, conçu pour, en utilisant un procédé suivant la revendication 4, faire l'apprentissage du premier système (32) mathématique artificiel, pour faire l'apprentissage d'un troisième système (41) mathématique artificiel, dont la structure coïncide avec celle du premier système (32) mathématique artificiel.

## FIG 1

10

$\Delta$P, $\Delta$Q

11

12

U

I

FIG 2

FIG 3

FIG 4

# FIG 5

# FIG 6

# FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3107174 A1